# EUROPÄISCHE PATENTSCHRIFT

(11) **EP 3 131 751 B1**
(45) Veröffentlichungstag und Bekanntmachung des Hinweises auf die Patenterteilung: **13.06.2018**
(21) Anmeldenummer: 16701580.9
(22) Anmeldetag: 18.01.2016
(51) Int. Cl.: B32B 15/01, C09D 133/08, C09D 4/00, C09D 5/08

(54) **ALUMINIUM-KUPFERVERBUNDHALBZEUG FÜR DIE ELEKTROTECHNIK UND VERFAHREN ZU SEINER HERSTELLUNG**
ALUMINUM-COPPER COMPOSITE SEMI-FINISHED PRODUCT FOR ELECTRICAL ENGINEERING AND METHOD FOR PRODUCING SAME
SEMI-PRODUIT COMPOSITE EN ALUMINIUM-CUIVRE POUR L'ÉLECTROTECHNIQUE ET SON PROCÉDÉ DE FABRICATION

(30) Priorität: 03.02.2015 DE 102015101527
(43) Veröffentlichungstag der Anmeldung: 22.02.2017
(73) Patentinhaber: Doduco Solutions GmbH, 75181 Pforzheim (DE)
(72) Erfinder: DREISSIGACKER, Uwe, 78331 Engelsbrand (DE); TRIBUS, Helena, 75175 Pforzheim (DE)
(74) Vertreter: Twelmeier Mommer & Partner
(86) Internationale Anmeldenummer: PCT/EP2016/050894
(87) Internationale Veröffentlichungsnummer: WO 2016/124382

(56) Entgegenhaltungen:
- WO-A1-00/24527
- CN-A- 101 654 570

## Beschreibung

Die Erfindung betrifft ein Halbzeug für die Elektrotechnik, das ein Verbund aus einer Aluminiumplatte und einer Kupferplatte ist. Kupfer zeichnet sich durch eine hohe elektrische Leitfähigkeit aus, ist allerdings ein kostenintensiver Rohstoff. Einen Teil des Kupfers durch Aluminium zu ersetzen, ermöglicht die Herstellung von kostengünstigeren und leichteren Halbzeugen. Derartige Halbzeuge werden auch als Al-Cu-Hybridmaterial bezeichnet und können sowohl flächenplattiert als auch überlappend plattiert aus Aluminium- und Kupferplatten hergestellt werden.

Ein Problem von Aluminium-Kupferverbundhalbzeugen bzw. daraus hergestellten Produkten ist eine sehr hohe Korrosionsanfälligkeit des Aluminium-Kupferverbunds.

Aus der CN 101 654 570 A ist ein wasser-basierte Lack zum Schutz von metallischen Oberflächen bekannt, der durch UV-Strahlung aushärtet und 15 bis 45 % Acrylat enthält.

Aus der WO 00/24527 A1 ist ein Verfahren zur Herstellung von adhesiven Oberflächenbeschichtungen bekannt, bei dem ein Lack, der ethylenisch ungesättigte Monomere oder Oligomere sowie einen Photoinitiator enthält, der Lichteinwirkung ausgehärtet wird.

Aufgabe der vorliegenden Erfindung ist es, einen Weg aufzuzeigen, wie die Korrosionsanfälligkeit von Aluminium-Kupferverbundhalbzeugen reduziert werden kann.

Diese Aufgabe wird durch ein Halbzeug mit den im Anspruch 1 angegebenen Merkmalen, ein aus einem solchen Halbzeug hergestellten Halbfabrikat sowie durch ein Verfahren zum Herstellen eines Halbzeugs gemäß Anspruch 9 gelöst.

Anstatt einen Korrosionsschutz durch eine kostenintensive galvanische Beschichtung zu bewirken, wird erfindungsgemäß das Halbzeug mit einer Schutzschicht auf Acrylatbasis versehen, die wenigstens 5 Gew.-% Ethlyacrylat enthält. Diese Schutzschicht braucht nicht die gesamte Oberfläche des Halbzeugs zu bedecken, sondern kann gezielt auf die Teile der Oberfläche des Halbzeugs aufgebracht werden, die Korrosionsschutz benötigen, also später nicht zur elektrischen Kontaktierung verwendet werden. Die Schutzschicht wird als ein Lack aufgetragen, der wenigstens einen Fotoinitiator enthält. Der Lack wird dann durch Lichteinwirkung unter Bildung von Acrylatpolymer, vorzugsweise Acrylatcopolymer aushärtet.

Als Acrylatomonomere in dem noch nicht ausgehärteten Lack lassen sich beispielsweise aromatische Epoxyacrylatmonomere, aliphatische Epoxyacrylatmononmere und/oder Polyesteracrylatmonomere verwenden. Geeignete Monomere sind beispielsweise 2-Pheoxyethylacrylatmonomere und Tetrahydrofurfurylacrylatmonomere. Zusätzlich können dem Lack Acrylatoligomere, beispielsweise Urethan-Acrylatoligomere oder Polyestermodifizierte Epoxy-di-Acrylate zugefügt sein.

Eine vorteilhafte Weiterbildung der Erfindung sieht vor, dass die Schutzschicht wenigsten 5 Gew.-% Urethanacrylat enthält. Bevorzugt enthält die Schutzschicht nicht mehr als 15 Gew.-% Urethanacrylat, besonders bevorzugt nicht mehr als 10 Gew.-% Urethanacrylat.

Eine weitere vorteilhafte Weiterbildung der Erfindung sieht vor, dass die Schutzschicht wenigstens 10 Gew.-%, vorzugsweise wenigstens 20 Gew.-% Epoxidacrylat enthält.

Eine weitere vorteilhafte Weiterbildung der Erfindung sieht vor, dass die Schutzschicht 10 Gew.-% bis 25 Gew.-% Ethlyacrylat enthält.

Eine weitere vorteilhafte Weiterbildung der Erfindung sieht vor, dass der Lack zwei oder mehr unterschiedliche Fotoinitiatoren enthält, die unterschiedliche Absorptionsspektren haben. Auf diese Weise lässt sich die strahlungsinduzierte Polymerisation deutlich beschleunigen, da größere Bereiche des Spektrums einer Strahlungsquelle ausgenutzt werden können. Für eine wirtschaftliche Fertigung ist dies ein bedeutender Vorteil, da kurze Polymerisationszeiten entsprechend kurze Verweilzeiten des Halbzeugs unter einer Strahlungsquelle implizieren. Besonders gut geeignet sind Fotoinitiatoren, die eine Polymersation des Lacks bei Einwirkung von UV-Strahlung bewirken. Als Photoinitiatoren können beispielsweise Trimetylbenzophenon, α-Hydroxyketon, 2-Hydroxy-2-methylpropiphenon, 2-Hydroxy-2-methyl-I-phenyl-propanon-I-on und/oder Bis(2,4,6-trimethylbenzoly)-Phenylphosphinoxid verwendet werden.

Eine weitere vorteilhafte Weiterbildung der Erfindung sieht vor, dass wenigstens ein Teil der Acrylatmonomere mindestens zwei ethylenische Doppelbindungen pro Molekül enthält.

Eine weitere vorteilhafte Weiterbildung der Erfindung sieht vor, dass der Lack als Hilfsadditiv mindestens einen Haftvermittler, vorzugsweise einen acrylatbasierten Haftvermittler enthält. Besonders gut geeignet sind methacrylat basierte Haftvermittler, beispielsweise Phosphorsäure-Methacrylat. Auf diese Weise kann die Haftung des Lacks an der Aluminium- bzw. Kupferoberfläche des Halbzeugs verbessert werden. Alternativ oder zusätzlich kann der Lack einen Untergrundbenetzer, beispielsweise auf Polysiloxanbasis, und/oder ein rheologisches Hilfsadditiv enthalten, bevorzugt auf Silikatbasis, beispielsweise Bentonit, Schichtsilikat oder Kiselsäure.

Eine weitere vorteilhafte Weiterbildung der Erfindung sieht vor, dass der Lack als Füllstoff, Quarzpulver und/oder Talkum enthält.

Eine weitere vorteilhafte Weiterbildung der Erfindung sieht vor, dass der Lack nach Aushärten durch Lichteinwirkung noch reaktive Monomere enthält, um bei einer Weiterverarbeitung des Halbzeugs durch Umspritzen mit Kunststoff eine Haftung zwischen Lack und Kunststoff zu ermöglichen.

Der erfindungsgemäß verwendete Lack kann beispielsweise die folgenden Bestandteile haben:
- bis zu 40 Gew. %, vorzugsweise 20 bis 35 Gew. % aromatische Epoxyacrylatmonomere,
- bis zu 15 Gew. %, vorzugsweise 5 bis 15 Gew. % aliphatische Epoxyacrylatmonomere,
- 10 bis 30 Gew. % Reaktivverdünner,
- 0,5 bis 10 Gew. % Haftvermittler,
- 1 bis 10 Gew. % Photoinitator,
- 15 bis 35 Gew. % Füllstoff oder Pigment,
- bis zu 10% Hilfsadditive, beispielsweise Entschäumer, Untergrundbenetzer, rheologische Additive, Verlaufsmittel, Dispergiermittel und/oder Verdicker.

Die Gewichtsprozente der angegebenen Komponenten können sich zu 100 Gew. % ergänzen; sie können bei einem Lack aber auch weniger betragen, wenn dieser zusätzliche Komponenten enthält, die vorstehend nicht angegeben sind, beispielsweise Acrylatoligomere, insbesondere Urethan-Acrylat-Oligomere. Jede jeweils angegebenen Komponenten kann ein Gemisch aus unterschiedlichen Stoffen sein. Beispielsweise kann der Lack 1 bis 10 Gew. % eines einzigen Photoinitiatoren enthalten oder mehrere Photoinitiatoren, die zusammen 1 bis 10 Gew. % ergeben. Ebenso können beispielsweise mehrere verschiedene Füllstoffe oder Pigmente verwendet werden.

Ein Ausführungsbeispiel des Lacks kann folgende Zusammensetzung haben:
- 10 bis 25 Gew. % 2-Pheoxyethylacrylat als Monomere,
- 10 bis 50 Gew. % Epoxidacrylat als Bindemittel,
- 10 bis 25 Gew. % Tetrahydrofurfurylacrylat als Monomere,
- 5 bis 10 Gew. % Urethan-Acrylat-Oligomer als Bindemittel,
- 5 bis 10 Gew. % 2-Propensäure, Reaktionsprodukte mit Pentaerythrit als Begeleitstoff,
- 1 bis 5 Gew. % 2-Hydroxy-2 methlypropiophenon als Photoinitiator,
- 1 bis 5 Gew. % Phenyl-bis(2,4,6-trimethylbenzol)-phosphinoxid als Photoinitiator,
- bis zu 0,1 Gew. % Acrylsäure als Begleitstoff.

Ein erfindungsgemäßes Halbzeug kann hergestellt werden, indem eine Aluminiumplatte und eine Kupferplatte in einem Randbereich aufeinander gelegt und dann durch Walzen verbunden werden. Möglich ist es auch, eine Aluminium und eine Kupferplatte vollflächig übereinander zu legen und dann durch Walzen zu verbinden. Die Aluminiumplatte kann beispielsweise aus AlSi1 oder einer anderen Aluminiumlegierung bestehen, die bevorzugt wenigstens 99 Gew % Aluminium enthält. Die Kupferplatte kann beispielsweise aus OF-Kupfer oder einer Kupferlegierung bestehen, die wenigstens 99 Gew. % Kupfer enthält. Die Kupferplatte kann beispielsweise auch aus Bronze, insbesondere CuSnx mit x≤20, oder aus Messing, insbesondere CuZnx mit 5≤x≤37sein.

Ein erfindungsgemäßes Halbzeug kann die Form einer Platte haben, beispielsweise ein Streifen oder ein Band sein. Ein erfindungsgemäßes Halbzeug kann zu einem Halbfabrikat weiterverarbeitet werden, beispielsweise durch Stanzen, Biegen oder ein anderes Umformverfahren. Bei der Herstellung eines erfindungsgemäßen Halbfabrikats kann ein erfindungsgemäßes Halbzeug beispielsweise auch mit Kunststoff angespritzt oder umspritzt werden.

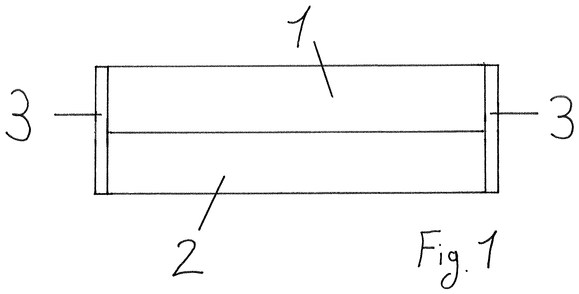

Figur 1 zeigt schematisch eine Schnittansicht eines Ausführungsbeispiels eines erfindungsgemäßen Halbzeugs, das aus einer Aluminiumplatte 1 und einer Kupferplatte 2 besteht. Auf seinen Seiten, in denen die Aluminiumplatte 1 an die Kupferplatte 2 angrenzt, trägt das Halbzeug eine Schutzschicht 3 auf Acrylatbasis.

## Patentansprüche

1. Halbzeug für die Elektrotechnik, das ein Verbund aus einer Aluminiumplatte (1) und einer Kupferplatte (2) ist, **dadurch gekennzeichnet, dass** das Halbzeug eine Schutzschicht (3) auf Acrylatbasis trägt, die wenigstens 5 Gew.-% Ethlyacrylat enthält und als ein wenigstens einen Photoinitiator enthaltender Lack aufgetragen wurde, der durch Lichteinwirkung unter Bildung von Acrylatpolymer ausgehärtet wurde.

2. Halbzeug nach Anspruch 1, **dadurch gekennzeichnet, dass** die Schutzschicht (3) wenigstens 5 Gew.-% Urethanacrylat enthält.

3. Halbzeug nach Anspruch 2, **dadurch gekennzeichnet, dass** die Schutzschicht (3) nicht mehr als 15% Urethanacrylat enthält.

4. Halbzeug nach einem der vorstehenden Ansprüche, **dadurch gekennzeichnet, dass** die Schutzschicht (3) wenigstens 10 Gew.-% Epoxidacrylat enthält.

5. Halbzeug nach einem der vorstehenden Ansprüche, **dadurch gekennzeichnet, dass** die Schutzschicht (3) 10 Gew.-% bis 25 Gew.-% Ethlyacrylat enthält.

6. Halbzeug nach einem der vorstehenden Ansprüche, **dadurch gekennzeichnet, dass** der Lack zwei oder mehr unterschiedliche Photointiatoren enthält.

7. Halbzeug nach einem der vorstehenden Ansprüche, **dadurch gekennzeichnet, dass** der Lack nach Aushärten durch Lichteinwirkung noch reaktive Monomere enthält.

8. Halbfabrikat hergestellt aus einem Halbzeug nach einem der vorstehenden Ansprüche.

9. Verfahren zum Herstellen eines Halbzeugs für die Elektronik nach Anspruch 1, wobei ein Verbund aus einer Aluminiumplatte (1) und einer Kupferplatte (2) hergestellt wird, **dadurch gekennzeichnet, dass** auf den Verbund ein Lack auf Acrylatbasis aufgetragen wird, der Acrylatmonomere, einen Reaktivverdünner und wenigstens einen Photoinitiator enthält, und danach die Acrylatmonomere durch Strahlungseinwirkung polymerisiert werden.

10. Verfahren nach Anspruch 8, **dadurch gekennzeichnet, dass** wenigstens ein Teil der Acrylatmonomere aromatische oder aliphatische Epoxyacrylatmonomere sind.

11. Verfahren nach Anspruch 8 oder 9, **dadurch gekennzeichnet, dass** wenigstens ein Teil der Acrylatmonomere Polyesteracrylatmonomere sind.

12. Verfahren nach einem der Ansprüche 8 bis 11, **dadurch gekennzeichnet, dass** wenigstens ein Teil der Acrylatmonomere mindestens zwei ethylenische Doppelbindungen pro Molekül enthält.

13. Verfahren nach einem der Ansprüche 8 bis 12, **dadurch gekennzeichnet, dass** der Lack als Hilfsadditiv einen Haftvermittler enthält.

14. Verfahren nach einem der Ansprüche 8 bis 13, **dadurch gekennzeichnet, dass** der Lack als Hilfsadditiv einen Untergrundbenetzer enthält.

15. Verfahren nach einem der Ansprüche 8 bis 14, **dadurch gekennzeichnet, dass** der Verbund aus einer Aluminiumplatte (1) und einer Kupferplatte (2) hergestellt wird, indem die Aluminiumplatte (1) und die Kupferplatte (2) in einem Randbereich aufeinandergelegt und dann durch Walzen verbunden werden.

## Claims

1. A semi-finished product for electrical engineering, which is a composite of an aluminium sheet (1) and a copper sheet (2), **characterised in that** the semi-finished product bears an acrylate-based protective layer (3), which contains at least 5 wt% ethyl acrylate and has been applied as a lacquer, which contains at least one photoinitiator and has been cured under the effect of light to form acrylate polymer.

2. The semi-finished product according to claim 1, **characterised in that** the protective layer (3) contains at least 5 wt% urethane acrylate.

3. The semi-finished product according to claim 2, **characterised in that** the protective layer (3) contains no more than 15 % urethane acrylate.

4. The semi-finished product according to any one of the preceding claims, **characterised in that** the protective layer (3) contains at least 10 wt% epoxy acrylate.

5. The semi-finished product according to any one of the preceding claims, **characterised in that** the protective layer (3) contains 10 wt% to 25 wt% ethyl acrylate.

6. The semi-finished product according to any one of the preceding claims, **characterised in that** the lacquer contains two or more different photoinitiators.

7. The semi-finished product according to any one of the preceding claims, **characterised in that** the lacquer still contains reactive monomers after curing under the effect of light, in order to allow improved adhesion between lacquer and plastic when the semi-finished product is further processed by encapsulation with plastic.

8. An unfinished product produced from a semi-finished product according to any one of the preceding claims.

9. A method for producing a semi-finished product according to claim 1 for electrical engineering, in which a composite of an aluminium sheet (1) and a copper sheet (2) is produced, **characterised in that** an acrylate-based lacquer, which contains acrylate monomers, a reactive diluent, and at least one photoinitiator, is applied to the composite, and then the acrylate monomers are polymerised under the effect of radiation.

10. The method according to claim 9, **characterised in that** at least some of the acrylate monomers are aromatic or aliphatic epoxy acrylate monomers.

11. The method according to claim 9 or 10, **characterised in that** at least some of the acrylate monomers are polyester acrylate monomers.

12. The method according to any one of claims 9 to 11, **characterised in that** at least some of the acrylate monomers contain at least two ethylenic double bonds per molecule.

13. The method according to any one of claims 9 to 12, **characterised in that** the lacquer contains an adhesion promoter as an additive.

14. The method according to any one of claims 9 to 13, **characterised in that** the lacquer contains a substrate wetter as an additive.

15. The method according to any one of claims 9 to 14, **characterised in that** the composite is produced from an aluminium sheet (1) and a copper sheet (2), in which the aluminium sheet (1) and the copper sheet (2) are placed one above the other in an edge region and then joined by rolling.

## Revendications

1. Semi-produit destiné à l'électrotechnique, qui est un composite à base d'une plaque d'aluminium (1) et d'une plaque de cuivre (2), **caractérisé en ce que** le semi-produit porte une couche de protection (3) à base d'acrylate, qui contient au moins 5 % en poids d'acrylate d'éthyle et qui a été appliquée sous forme d'une laque contenant au moins un photoinitiateur qui a été durci par l'effet de la lumière, moyennant la formation d'un polymère d'acrylate.

2. Semi-produit selon la revendication 1, **caractérisé en ce que** la couche de protection (3) contient au moins 5 % en poids d'acrylate d'uréthane.

3. Semi-produit selon la revendication 2, **caractérisé en ce que** la couche de protection (3) ne contient pas plus de 15 % d'acrylate d'uréthane.

4. Semi-produit selon l'une des revendications précédentes, **caractérisé en ce que** la couche de protection (3) contient au moins 10 % en poids d'acrylate d'époxyde.

5. Semi-produit selon l'une des revendications précédentes, **caractérisé en ce que** la couche de protection (3) contient de 10 % en poids à 25 % en poids d'acrylate d'éthyle.

6. Semi-produit selon l'une des revendications précédentes, **caractérisé en ce que** la laque contient deux ou plus de photoinitiateurs différents.

7. Semi-produit selon l'une des revendications précédentes, **caractérisé en ce que** la laque contient encore des monomères réactifs après le durcissement par l'influence de la lumière.

8. Produit semi-manufacturé fabriqué à base d'un semi-produit selon l'une des revendications précédentes.

9. Procédé de fabrication d'un semi-produit destiné à l'électronique selon la revendication 1, où un composite à base d'une plaque d'aluminium (1) et d'une plaque de cuivre (2) est fabriqué, **caractérisé en ce qu'**une laque à base d'acrylate, qui contient des monomères d'acrylate, un diluant réactif et au moins un photoinitiateur, est appliquée sur le composite et ensuite les monomères d'acrylate sont polymérisés par l'effet d'un rayonnement.

10. Procédé selon la revendication 8, **caractérisé en ce qu'**au moins une partie des monomères d'acrylate sont des monomères aromatiques ou aliphatiques d'époxy acrylate.

11. Procédé selon la revendication 8 ou 9, **caractérisé en ce qu'**au une partie des monomères d'acrylate sont des monomères de polyester acrylate.

12. Procédé selon l'une des revendications 8 à 11, **caractérisé en ce qu'**au moins une partie des monomères d'acrylate contient au moins deux doubles liaisons éthyléniques par molécule.

13. Procédé selon l'une des revendications 8 à 12, **caractérisé en ce que** la laque contient un promoteur d'adhésion en tant qu'additif auxiliaire.

14. Procédé selon l'une des revendications 8 à 13, **caractérisé en ce que** la laque contient un agent mouillant de support en tant qu'additif auxiliaire.

15. Procédé selon l'une des revendications 8 à 14, **caractérisé en ce que** le composite est fabriqué à partir d'une plaque d'aluminium (1) et d'une plaque de cuivre (2), **en ce que** la plaque d'aluminium (1) et la plaque de cuivre (2) sont posées l'une sur l'autre au niveau d'une zone de bordure et sont ensuite reliées par laminage.
